# EUROPEAN PATENT APPLICATION

(11) **EP 1 271 875 A1**
(43) Date of publication of application: **02.01.2003**
(21) Application number: 01202382.6
(22) Date of filing: 21.06.2001
(51) Int. Cl.: H04L 29/06

(54) **Device arranged for exchanging data, and method of manufacturing**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

A first device (110) arranged for exchanging data with a second device (130). The first device (110) receives from the second device (130) a certificate comprising a public key (UPK) for the second device. The first device (110) then authenticates the second device (130) as a strongly protected device upon a successful verification of the received certificate with a public key (CAPK) of a Certifying Authority, if the public key of the Certifying Authority is available, and authenticates the second device (130) as a weakly protected device upon a successful verification of the received certificate with a locally available public key (SPK). The second device (130) does the same to achieve mutual authentication. Having authenticated each other, the devices (110, 130) can securely set up session keys and exchange data. The data preferably has associated DRM rules.

## Description

The invention relates to a first device arranged for exchanging data with a second device, and to a method of authenticating a remote device.

When exchanging data between a source and a sink device, it is often desirable that the devices can authenticate each other. This way, the source knows it is sending the data to a trusted sink, and the sink knows the origin of the data it receives. This is important e.g. when the sink needs to download new software, but also when distributing data in accordance with Digital Rights Management (DRM) rules.

It is well known that public key cryptography can be used to authenticate a device. The device has a unique public key and a unique secret key. An independent third party issues a so-called certificate comprising an identifier for the device and a public key for the device. Another device can download the certificate, and encrypt a challenge with the device's public key which only that device can decrypt. If decryption is successful, the other device knows it is communicating with the device identified in the certificate.

However, this approach requires that the other device somehow obtains the certificate for the device it wishes to authenticate. Further, the approach is black/white: either authentication is successful, or it isn't, and in the latter case the devices cannot exchange data in a mutually trusted fashion. Devices can of course have multiple public keys, with multiple associated certificates, but this is complex and difficult to manage. More importantly, it requires the cooperation of a Certifying Authority to issue the certificates.

EP-A-0 592 808 discloses a key distribution mechanism that uses a key distribution channel between the two devices. The devices share a key-encrypting key, which is installed as part of system initialization. The session key is encrypted under the key-encrypting key in the first device, and decrypted with the same key in the second device (column 12, lines 33-43). However, no authentication is performed between the devices for the thusly distributed session key. The mechanism is also not transparent, in that there is no easy way to switch from the above certificate-based approach to this key distribution mechanism or vice versa.

US-B-5,949,883 discloses an encryption system which allows transparent and variable protection between a high-trust and a low-trust environment. It does this by choosing a common encryption algorithm, e.g. the Data Encryption Standard (DES) in both environments, and fixing a number of key bits in devices in the low-trust environment. This way, a device in the low-trust environment can encrypt data for a device in the high-trust environment which the latter can decrypt. The encrypted data can also be accessed by law enforcement agencies by brute forcing the key, since a number of key bits has been fixed. However, the device in the high-trust environment cannot establish whether it is communicating with another device in the high-trust environment, or with a device in the low-trust environment.

It is an object of the invention to provide a first device according to the preamble, which can authenticate the second device transparently and scalably.

This object is achieved according to the invention in a first device comprising
- receiving means for receiving from the second device a certificate for a public key (UPK) for the second device, and
- authenticating means for authenticating the second device as a strongly protected device upon a successful verification of the received certificate with a public key of a Certifying Authority (CAPK), if the public key of the Certifying Authority is available, and authenticating the second device as a weakly protected device upon a successful verification of the received certificate with the locally available public key (SPK).

The authentication steps outlined above are preferably executed by both the first and the second device. The first or the second device can be a source, and the other is then a sink. This way, a mutual authentication is realized. The certificate received from the second device can either be signed by the Certifying Authority, or by a secret key available in the second device. In the latter case, the first device must have the corresponding public key locally available. This case is less secure, since there now is no independent third party that can vouch for the authenticity and validity of the certificate. For this reason, the second device is in this case authenticated as a weakly protected device.

If the first device is a sink, and has the public key of the Certifying Authority available, it first attempts to verify the certificate using that public key. If successful, it knows the second device (the source) is strongly protected. The sink should then be able to authenticate itself to the source as a strongly protected device as well, so that they can exchange data securely. But if the certificate fails to verify using the public key of the Certifying Authority, the first device can switch to the weak mode by verifying the certificate with the locally available public key. This way, the authentication - and, by implication, also the protection for the data - is scalable.

In an embodiment the first device further comprises transmitting means for transmitting to the second device a certificate for a public key (UPK) for the first device, the certificate either being signed by a Certifying Authority or being signed by a locally available secret key (SSK). The first device can initiate the mutual authentication procedure as outlined above by simply sending a certificate to the second device. If the device has a certificate signed by the Certifying Authority, it will most likely want to use that in order to be authenticated as a strongly protected device. However, if it has no such certificate, it must generate one itself, and send that certificate instead.

In a preferred variant of this embodiment, the certificate is signed by the Certifying Authority if the second device has been authenticated as a strongly protected device, and the certificate is signed by the locally available secret key (SSK) if the second device has been authenticated as a weakly protected device.

It may also happen that the first device is not the one that initiated the mutual authentication procedure. In that case, it first authenticates the second device as described above. It then knows the protection level of the second device, and can send back the appropriate certificate. If the first device is a sink which has authenticated the second device as a strongly protected source, but has no certificate signed by the Certifying Authority available, then it aborts, since weakly protected sinks may not work together with strongly protected sources

In a further embodiment the authenticating means are arranged for preventing exchanging data with the second device if the second device has been authenticated as a weakly protected device and the first device is a strongly protected device. This allows devices to be connected with each other in a transparent fashion, without having to worry that strong source devices accidentally transmit valuable data to weak sink devices. In fact, a strongly protected source can recognize the sink device as a weakly protected device upon an unsuccessful verification of the received certificate with the public key of the Certifying Authority.

In a further embodiment the first device further comprises a weak encryption key generator arranged for computing a first hash of a concatenation of the session key and the locally available secret key (SSK), and using the first hash as an encryption key for encrypting data to be exchanged with the second device.

Because of its simplicity, this mode of data encryption key generation can be used to seriously reduce the amount of processing in bridging or 'dumb' storage devices. Further, no communication is required between source and sink for the generation of encryption keys during the session.

In a variant of this embodiment the weak encryption key generator is further arranged for subsequently computing a second hash of a concatenation of the first hash and the locally available secret key, and using the second hash in the place of the first hash.

This way, the source and the sink can regularly change keys, so that a compromise of one data encryption key is only a temporary problem. Since the locally available secret key is still (presumably) secret, the hash of the concatenation of the previous key with the secret key cannot be predicted by an attacker.

In a further embodiment the first device further comprises session establishing means for building a container comprising a session key and Digital Rights Management data, signing the container with a secret key (USK) corresponding to the public key (UPK) for the first device, encrypting the signed container with the public key (UPK) for the second device and transmitting the signed and encrypted container to the second device.

A session can be established each time a source wants to send content to the sink. A session can thus be the downloading of a music track from source to sink, the copying of a whole CD, the recording of a football match, and so on.

The Digital Rights Management data has to be inspected by both mutually authenticated devices to verify that transmission of the content is allowed. Securely sending a description of the digital rights in a container allows bridging devices or 'dumb' storage devices that probably have no understanding of the format of the content to correctly handle that content without having to process the content itself. If the application requires it, additional information can also be stored into the container.

In a further embodiment the first device further comprises session establishing means for receiving from the second device a signed and encrypted container, decrypting the container with a secret key (USK) corresponding to the public key (UPK) for the first device, verifying the signature with the public key (UPK) for the second device, and obtaining a session key and Digital Rights Management data from the container.

It is a further object of the invention to provide a method according to the preamble, which authenticates the second device transparently and scalably.

This object is achieved according to the invention in a method comprising
- receiving from the remote device a certificate comprising a public key (UPK) for the remote device,
- authenticating the remote device as a strongly protected device upon a successful verification of the received certificate with a public key (CAPK) of a Certifying Authority, if the public key of the Certifying Authority is available, and authenticating the remote device as a weakly protected device upon a successful verification of the received certificate with a locally available public key (SPK).

The invention further relates to a computer program product arranged for causing a processor to execute the method according to the invention.

These and other aspects of the invention will be apparent from and elucidated with reference to the embodiments shown in the drawings, in which:
Figure 1 schematically shows an embodiment of an arrangement comprising source and sink devices;
Figure 2 is a flowchart showing a method of authentication in a source device;
Figure 3 is a flowchart showing a method of authentication in a sink device;
Figure 4 is a flowchart showing a method of establishing a communication session with a sink device in a source device;
Figure 5 is a flowchart showing a method of establishing a communication session with a source device in a sink device;
Figure 6 is a flowchart showing a method of key generation for devices mutually authenticated as weakly protected;
Figure 7 is a flowchart showing a method of key generation for devices mutually authenticated as strongly protected; and
Figure 8 schematically shows an embodiment of an arrangement comprising a source device, a sink device, and two bridge devices.

Throughout the figures, same reference numerals indicate similar or corresponding features. Some of the features indicated in the drawings are typically implemented in software, and as such represent software entities, such as software modules or objects.

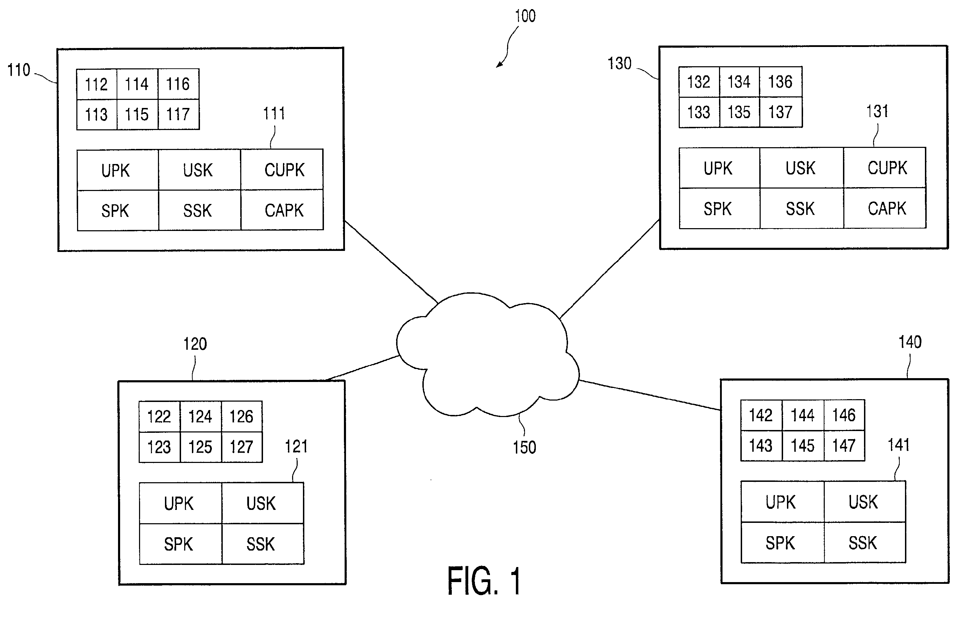

Figure 1 schematically shows an arrangement 100 comprising source devices 110, 120 and sink devices 130, 140. In this text, the term "source device" or just "source" for short, indicates a device that has data to be transmitted to another device, the "sink device" or just "sink" for short. The source device usually starts with establishing a communication session with the sink device.

Example embodiments of source or sink devices include audio/video receivers and players, set top boxes, general purpose computers, mobile telephones, Internet appliances, and so on. When a source or sink device operates in accordance with the invention as described herein, it is said to be "SCOP-enabled". SCOP stands for Scalable Content Protection, which is what the invention provides for.

The data that is transmitted can be anything. In a preferred embodiment, the data represents content items such as music, video, picture, texts and other potentially valuable materials. Such data should be transferred in a secure fashion to prevent unauthorized access. For example, the data might have associated Digital Rights Management (DRM) rules which restrict playback and/or copying of the data. Such data should only be transmitted between devices that adhere to the DRM rules and that enforce the restrictions in the rules.

In this text, a distinction is made between strongly protected devices and weakly protected devices. Consider content that is not highly valuable and thus plays on weakly protected sources. There is no reason why the sinks would have to enforce strong protection, since the sources themselves do not. However, if the content is highly valuable, sources will be strongly protected and sinks should thus also be strongly protected, to prevent malicious users to access the highly valuable content by breaking weakly protected sinks.

In Figure 1, devices 110 and 130 are strongly protected devices, whereas devices 120 and 140 are weakly protected devices.

All devices:
- securely store (impossible to read/modify/replace) a unique secret key (USK)
- securely store (impossible to modify/replace) a corresponding unique public key (UPK)
- securely store (impossible to read/modify/replace) a shared secret key (SSK)
- securely store (impossible to modify/replace) a matching shared public key (SPK) Strongly protected devices also:

- securely store (impossible to modify/replace) a certificate signed by the Certification Authority containing the unique public key UPK (CUPK)
- securely store (impossible to modify/replace) the public key of the Certification Authority (CAPK).

Devices that support key escrowing also will securely store (impossible to read/modify/replace) a secret key (ESK). To securely store keys, the devices 110, 120, 130, 140 are provided with respective secure memories 111, 121, 131, 141. Note that "reading" in this context means reading by an entity external to the device. Of course the device itself needs to read a secret key in order to decrypt messages or to generate signatures.

A secure memory may be provided e.g. on a smart card. In such a case, the smart card may also comprise a secure central processing unit (CPU), which can perform the necessary encryption, decryption and signature generation and verification operations. The secret keys then are unreadable even by the devices in which the smart card is inserted.

The devices comprise respective transmission modules 112, 122, 132, 142 and reception modules 113, 123, 133, 143 for the transmission and reception of messages from other devices. The source and sink devices are connected to each other in some fashion. In Figure 1, there is a network 150 connecting the devices 110, 120, 130, 140. This network can for instance be a Local Area Network, a cable network, or a Wide Area Network such as the Internet. The connection between the devices might also be wireless, such as an IEEE 1394, 802.11, HIPERLAN or Bluetooth connection.

### Mutual Authentication

Before data can be exchanged between a source and a sink, a mutual authentication needs to be performed. Weakly protected devices may exchange data with each other, as may strongly protected devices. A weakly protected source may also transmit data to a strongly protected sink. However, a strongly protected source may not transmit data to a weakly protected sink.

The authentication methods use public key cryptography. Preferably, elliptic curve cryptography is used for both signing and for encryption. Of course, also other public key systems such as RSA or Diffie-Hellman can be used. Such cryptographic systems are well known in the art.

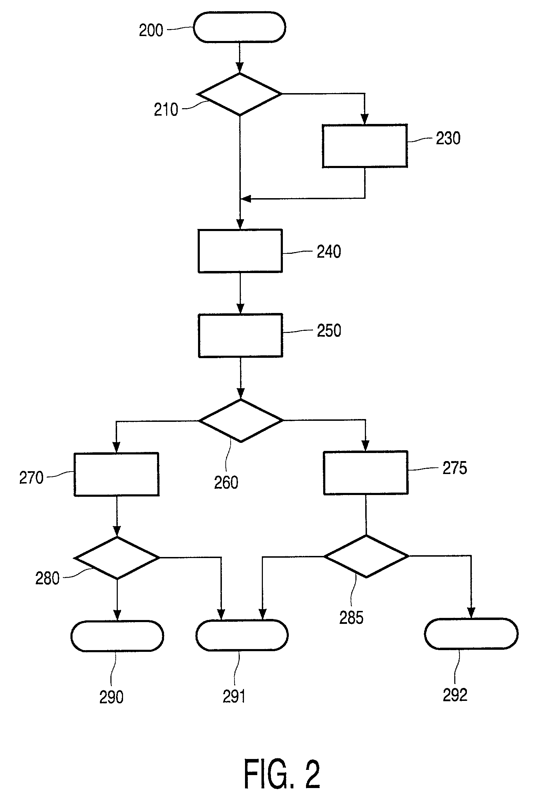

Figure 2 is a flowchart showing a method of authentication in a source device. Since a strongly protected sink should be able to interoperate with a weakly protected source, it is the source who will initiate the mutual authentication, so the sink can identify which strength to use. To perform the authentication, the source devices have respective authentication modules 114, 124.

At step 200, the source device starts the authentication method. First, at 210 the authentication modules 114, 124 determine if the certificate CUPK for the unique public key UPK is available. If this is the case, then the source device is strongly protected. So, authentication module 114 will find the certificate CUPK available, but authentication module 124 will not. The authentication module 114 then activates 240 the transmission module 112 to send the certificate CUPK to the sink device.

Authentication module 124 instead generates, at 230, a certificate for its unique public key UPK and signs it using the shared secret key SSK. It then activates 240 transmission module 122 to send the generated certificate to the sink device. The source device 120 may also have a certificate for its unique public key UPK, signed using the shared secret key SSK, available in the secure memory 121. This way, that certificate only needs to be generated once.

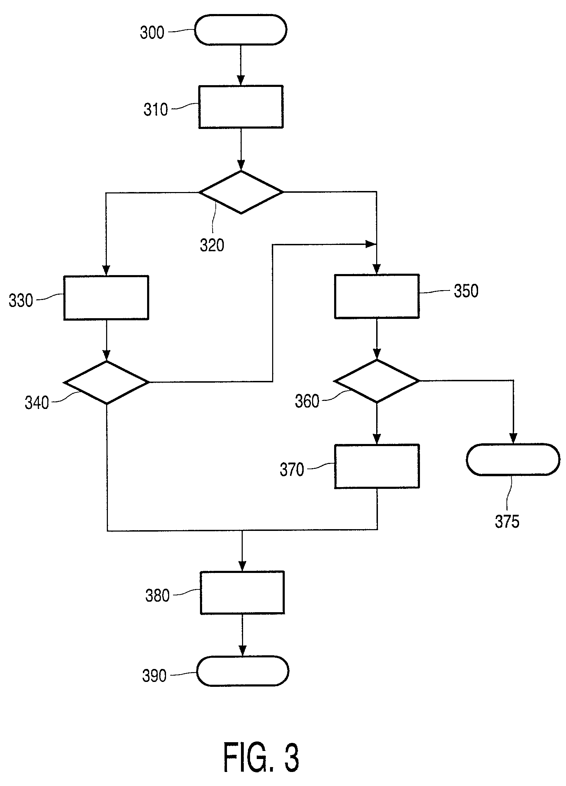

The receiving modules 113, 123 then wait at 250 for the sink device to respond with a certificate for the public key of the sink device. The operations in the sink device for responding with such a certificate are discussed below with reference to Figure 3.

Having received the certificate for the public key of the sink device, the receiving modules 113, 123 supply it to the authentication modules 114, 124. The authentication modules 114, 124 then determine 260 whether a public key CAPK for a Certifying Authority (CA) is available. This CA may, but needs not, be the same as the CA that issued the certificate CUPK. Authentication module 114 will find the public key CAPK available, and authentication module 124 will not. Usually, the public key CAPK will be part of a certificate for the CA, issued by the CA itself or by another CA.

The authentication module 114 attempts to verify 270 the received certificate using the public key CAPK. It then determines 280 whether the verification is successful. If so, the sink is authenticated 290 as a strongly protected sink. If not, then the authentication of the sink fails 291, since a strongly authenticated source is not permitted to communicate with a weakly protected sink.

The authentication module 124 attempts to verify 275 the received certificate using the shared public key SPK. It then determines 285 whether the verification is successful. If so, the sink is authenticated 292 as a weakly protected sink. If not, then the authentication of the sink fails 291.

Figure 3 is a flowchart showing a method of authentication in a sink device. Since a strongly protected sink should be able to interoperate with a weakly protected source, it is the source who will initiate the mutual authentication, so the sink can identify which strength to use. To perform the authentication, the sink devices have respective authentication modules 134, 144.

At step 300, the sink device starts the authentication method. First, at 310 the receiving modules 133, 143 receive from the source device a certificate for a public key for the source device. As the reader will recall, this certificate was sent by the source device at step 240 in the flowchart of Figure 2.

Having received the certificate for the public key of the source device, the receiving modules 133, 143 supply it to the authentication modules 134, 144, which then determine 320 whether a public key CAPK for a Certifying Authority (CA) is available. This CA may, but needs not, be the same as the CA that issued the certificate CUPK. Authentication module 134 will find the public key CAPK available, but authentication module 144 will not.

The authentication module 134 subsequently attempts to verify 330 the received certificate using the public key CAPK. It then determines 340 whether the verification is successful. If so, the source is authenticated as a strongly protected source, and the authentication module proceeds to step 380. If not, the authentication module 134 proceeds to step 350.

At 350, the authentication modules 134, 144 attempt to verify the received certificate using the shared public key SPK. They then determine 360 whether the verification is successful. If so, the source is authenticated as a weakly protected source. If not, then the authentication of the source fails 375.

Having successfully authenticated the source as a weakly protected source, the authentication modules 134, 144 generate 370 a certificate for their unique public keys UPK and sign it using the shared secret key SSK.

At 380, the authentication modules 134, 144 activate respective transmission modules 132, 142 to send the generated certificate to the source device. The sink devices 130, 140 may also have a certificate for their unique public key UPK, signed using the shared secret key SSK, available in the secure memory 131, 141. This way, that certificate only needs to be generated once.

To clarify the interactions between the authentication methods performed in source and sink devices, below are presented the four possible combinations of strongly and weakly protected sources and sinks, and the process in each of them. Strongly protected source to strongly protected sink

A strongly protected source will send its certificate signed by the Certification Authority (CUPK). The strongly protected sink will receive this certificate and verify it using the public key of the Certification Authority (CAPK). If the signature does not match, the strongly protected sink will verify the certificate using its shared public key (SPK). If there is still no match (as will be the case), the strongly protected sink will abort the protocol.

If the signature matches during the first verification however, the strongly protected sink knows the source uses strong protection and will in turn send its certificate signed by the Certification Authority (CUPK). The strongly protected source will receive this certificate and verify it using the public key of the Certification Authority (CAPK). If the signature does not match, the protocol aborts. Upon match, both devices will be authenticated for strong protection, and both devices will have the unique public key (UPK) of the other device.

### Weakly protected source to strongly protected sink

A weakly protected source will start by creating a certificate for its unique public key (UPK) and will sign it using the shared secret key (SSK). This creation step can be done beforehand to save resources. The certificate will be sent out to the strongly protected sink. The strongly protected sink will receive the signed certificate and verify it using the public key of the Certification Authority (CAPK). If the signature does not match (as will be the case), the strongly protected sink will verify the certificate using its shared public key (SPK). If there is still no match, the strongly protected sink will abort the protocol.

If a match is found however, the strongly protected sink knows the source only supports weak protection and it will in turn create a certificate (could be done beforehand to save resources) for its unique public key (UPK) and will sign it using the shared secret key (SSK). This certificate will be sent out to the source. When the source receives the certificate from the sink it will verify it using its shared public key (SPK). If the signature does not match, the source aborts the protocol. Upon match, both devices will be authenticated for weak protection, and both devices will have the unique public key (UPK) of the other device.

### Weakly protected source to weakly protected sink

A weakly protected source will start by creating a certificate for its unique public key (UPK) and will sign it using the shared secret key (SSK). This creation step can be done beforehand to save resources. The certificate will be sent out to the weakly protected sink. The weakly protected sink will receive the signed certificate and verify it using its shared public key (SPK). If there is no match, the weakly protected sink will abort the protocol.

If a match is found however, the weakly protected sink will in turn create a certificate for its unique public key (UPK) and will sign it using the shared secret key (SSK). This creation step can be done beforehand to save resources. This certificate will be sent out to the source. When the source receives the certificate from the sink it will verify it using its shared public key (SPK). If there is no match, the weakly protected source will abort the protocol. Upon match, both devices will be authenticated for weak protection, and both devices will have the unique public key (UPK) of the other device.

### Strongly protected source to weakly protected sink

A strongly protected source will directly send its certificate signed by the Certification Authority (CUPK). The weakly protected sink will receive this certificate and verify it using its shared public key (SPK). If there is no match (as will be the case), the strongly protected sink will abort the protocol. Thus, authentication will always fail. This way, a strongly protected source will never authenticate a weakly protected sink, and no data will then be transmitted from source to sink.

### Session Establishment

Once the source and sink have been mutually authenticated, a session needs to be established. Typically, the authentication has to be executed the first time a source and sink are connected to each other, while a session has to be established each time a source wants to send content to the sink. A session can thus be the downloading of a music track from source to sink, the copying of a whole CD, the recording of a football match, and so on.

At the beginning of each session a container will securely be transferred from source to sink. This container will contain a session key SK, randomly chosen by the source and, depending on whether the application is a Digital Rights Management (DRM) system or not, it will also contain a description of the digital rights associated with the content that will be transmitted during the session.

These digital rights will have to be inspected by both mutually authenticated devices to verify that transmission of the content is allowed. How this is done will be specified below. Securely sending a description of the digital rights in a container allows bridging devices or 'dumb' storage devices that probably have no understanding of the format of the content to correctly handle that content without having to process the content itself. If the application requires it, additional information can also be stored into the container.

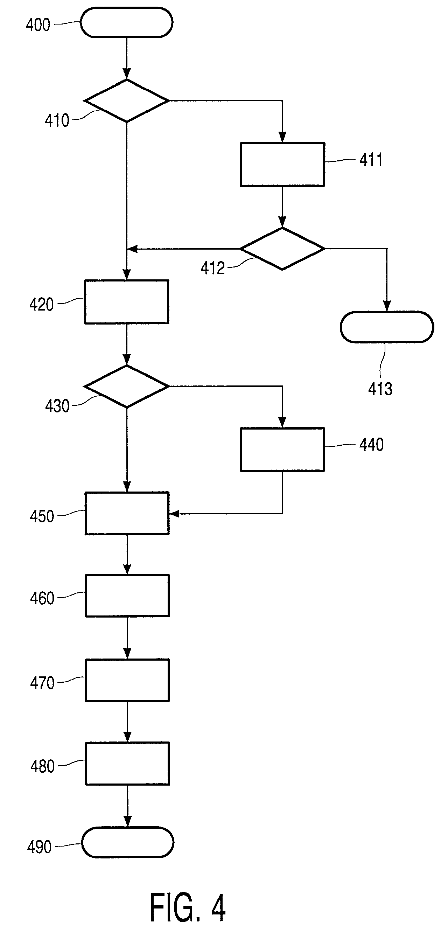

Figure 4 is a flowchart showing a method of establishing a communication session with a sink device in a source device. Session establishment is managed by session establishing modules 115, 125.

The method begins at step 400. First, at 410, the session establishing modules 115, 125 verify whether the data to be exchanged in this session must follow DRM rules. If so, at 411 a description of rights for the data is obtained, and a verification 412 is made whether the data may in fact be transmitted to the sink. If this verification is unsuccessful, the session establishing modules 115, 125 abort the session at 413.

At step 420, a random number SK is chosen, which will serve as session key for this particular session. As is well known in the field of cryptography, it is important to pick a highly unpredictable number as session key. Ideally, this number SK is perfectly random, but this is very costly and difficult to achieve, so usually the number SK is generated in a pseudo-random fashion. The size of the session key SK will vary, depending on the chosen strength of the protection scheme, according to well-specified tables.

Next, at 430 a determination is made whether key escrow should be used for this session. One key escrow technique is described in European Patent Application 00203609.3 (Attorney Docket PHNL000558) by the same applicant as the present application.

By mixing a relatively small session key SK with a longer secret key ESK, and using the resulting key RK as the session key, breaking the protection scheme will be made harder for malicious users (who do not know ESK) but will be made easier for authorities or content owners (who know ESK).

Be advised however, that this introduces a possible security threat into the protection scheme. It would be naive to think that malicious users will not eventually find out the secret key ESK by stealing it from poorly secured authorities/content owners, or by corrupting one of the numerous actors having access to it.

If key escrow should be used, then an escrow key ESK is mixed 440 with the random number SK, and the result is used as the session key.

At step 450, the session establishing modules 115, 125 generate a container. This container will contain the session key SK, and, depending on whether the application is a Digital Rights Management (DRM) system or not, it will also contain a description of the digital rights associated with the content that will be transmitted during the session.

The session establishing modules 115, 125 then sign 460 the container using their own respective unique secret key USK, and encrypt 470 the result with the unique public key UPK for the sink, which key it received and authenticated as described above with reference to Figure 2. The signed and encrypted container is then sent 480 to the sink. At 490, the method ends.

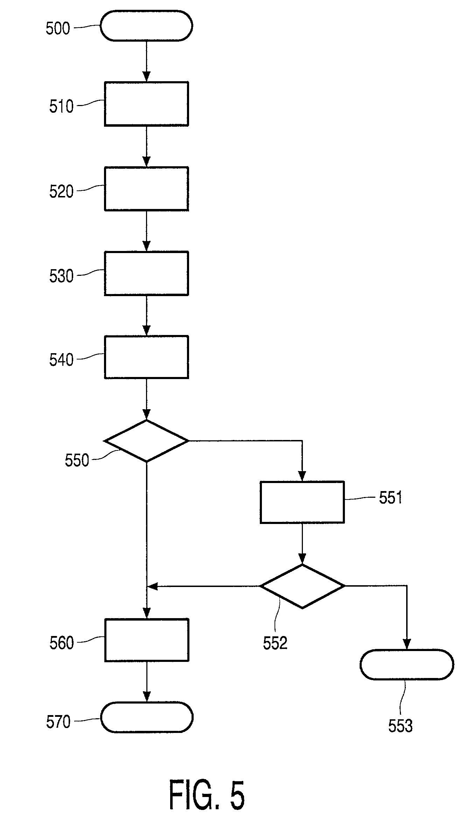

Figure 5 is a flowchart showing a method of establishing a communication session with a source device in a sink device. Session establishment in the sink devices 130, 140 is managed by session establishing modules 135, 145. At 500, the method begins. The session establishing modules 135, 145 receive the signed and encrypted container at 510.

Upon reception of the signed and encrypted container, the session establishing modules 135, 145 decrypt it first at 520 using their own unique secret key USK. Then, at 530, they verify the signature using the unique public key UPK that was received and authenticated as described above with reference to Figure 3.

The container is then examined 540 to retrieve the session key SK and if present, a description of the digital rights associated with the content it will receive during the session.

Next, at 550, the session establishing modules 135, 145 determine whether any digital rights are present. If so, at 551 the session establishing modules 135, 145 retrieve these rights from the container, and verify 552 whether there is a right present to transmit the data during this session. If not, the session is not allowed 553.

If no digital rights were found, or the rights found contain a right to transmit the data during this session, then at 560 the random number SK is retrieved and is available for use as session key. At 570, the method ends.

### Encryption Of Transmitted Data

The data to be transmitted from source to sink is encrypted using a strong block cipher whose number of rounds and whose size of encryption key EK will vary depending on the required strength of the protection scheme. The frequency with which the encryption keys EK will be updated during one session will also depend on the required strength of the protection scheme. To encrypt the data, the devices 110, 120, 130, 140 are provided with respective encryption/decryption modules 117, 127, 137, 147.

In a preferred embodiment, the encryption/decryption modules 117, 127, 137, 147 encrypt and decrypt data using the small, fast and royalty-free Tiny Encryption Algorithm (TEA) as the block cipher. This algorithm is described in David J. Wheeler and Roger M. Needham. "TEA, a Tiny Encryption Algorithm", volume 1008 of Lecture Notes in Computer Science, pages 363-- 366. Springer-Verlag, 1994. Also see on the Internet http://vader.brad.ac.uk/tea/tea.shtml.

Before encrypted data can be exchanged, encryption keys must be generated. Two modes of key generation are defined here. Strongly protected devices will mutually exchange information each time a new encryption key is needed. Weakly protected devices will just use a very simple scheme to generate successive encryption keys from the session key that was securely exchanged in the previous section. All strongly protected devices also must support weak encryption key generation. This allows a weakly protected source to interoperate with a strongly protected sink.

### Weak Encryption Key Generation

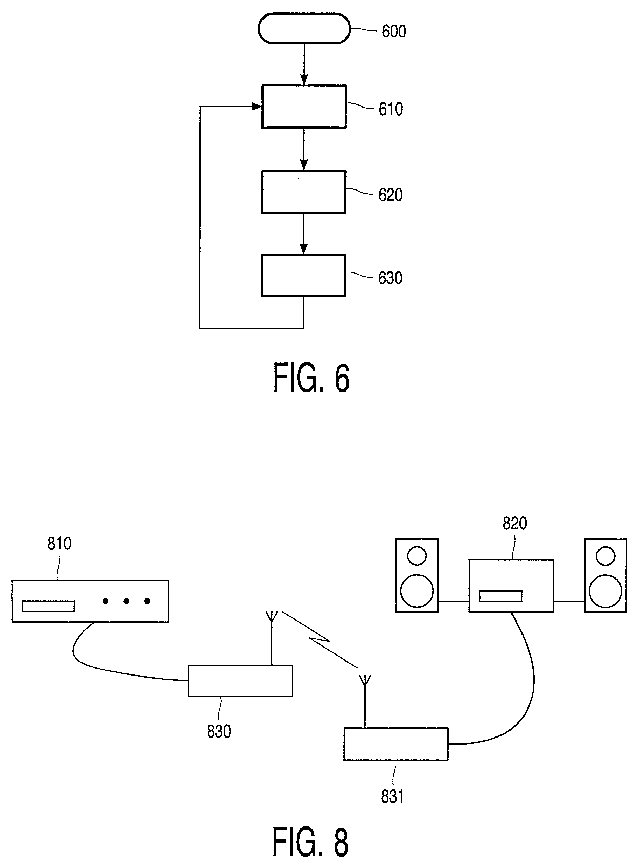

Figure 6 is a flowchart showing a method of key generation used when the source and sink devices have mutually authenticated each other as weakly protected devices. The weakly protected devices 120, 140 are provided with respective key generation modules 126, 146 which perform this method. The method starts at 600. The first time, at 610 the session key SK is concatenated with the shared secret key SSK.

The concatenation is then used as input to a hash function at 620. Many cryptographically strong hash functions are known in the art. In one embodiment, the above-mentioned Tiny Encryption Algorithm is used in combination with the well-known Davies-Mayer hash function.

The size of the output of the hash function is variable (depending on the strength of the protection scheme that will be used). This output will be used 630 as a first encryption key EK₁. Each time a new encryption key is needed, instead of concatenating the session key SK with the shared secret key SSK, the previous encryption key EKₙ₋₁ is hashed with the shared secret key SSK. No communication is required between source and sink for the generation of encryption keys during the session.

This mode of encryption key generation can be used to seriously reduce the amount of processing in bridging or 'dumb' storage devices.

### Strong Encryption Key Generation

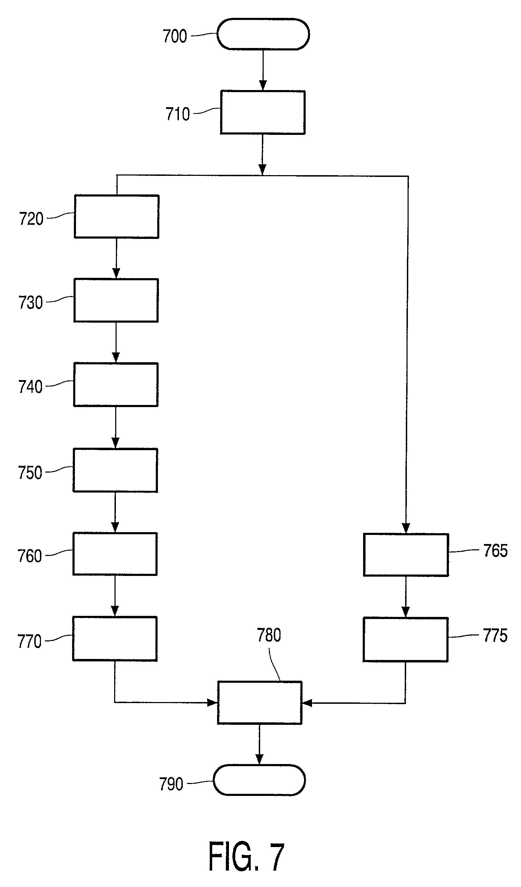

Figure 7 is a flowchart showing a method of key generation used when both devices have authenticated each other as strongly protected devices. The strongly protected devices 110, 130 are provided with respective key generation modules 116, 136 which perform this method. The method starts at 700.

At 710, both the key generation module 116 in the source and the key generation module 136 in the sink generate a random number of the same size as the session key, called R_{src} and Rₛₙₖ respectively.

At 720, the random number is XORed with the session key SK, and sent over 730 to the other side. At 740, both key generation modules 116, 136 receive the other side's random number XORed with the session key SK. To obtain the other side's actual random number, they again XOR it 750 with the session key SK. Both sides now know both random numbers.

In the source, the random number Rₛₙₖ is concatenated at 760 with the public key UPK of the sink. Similarly, in the sink, the random R_{src} is concatenated at 760 with the public key UPK of the source. The concatenation is then fed to a hash function at 770.

Further, in the sink, the random number Rₛₙₖ is concatenated at 765 with the public key UPK of the sink. Similarly, in the source, the random number R_{src} is concatenated at 765 with the public key UPK of the source. The concatenation is then fed to a hash function at 775.

The size of the output of the hash function is variable, depending on the strength of the protection scheme that will be used. The results are then XORed at 780 to form the encryption key EK. Each time a new encryption key EK is required, the process is repeated. This key generation method is stronger than the one described with reference to Figure 5, but it requires a communication between the source and sink, to exchange XORed session keys.

This method of key generation is based in part on the procedure for generating a combination key as given in the Bluetooth Specification Version 1.0A, paragraph 14.2.2.4, pages 155-156.

### Content Transmission

If a source wants to securely transmit content to a sink by going through a bridging device, for example an IEEE1394 to USB bridge, a link will have to be established between the source and the bridge (acting as a sink) and a second one between the bridge (now acting as a source) and the sink.

This would imply that the content be decrypted and again re-encrypted inside the bridge. To avoid this, the above encryption key generation methods can be used, provided the session establishment occurs as follows. The source and bridge establish a session as was described with reference to Figures 4 and 5 above, after both devices have mutually authenticated themselves as described above with reference to Figures 2 and 3.

The bridge and the sink however will establish a session (once they are mutually authenticated) where the session key SK is not randomly chosen by the bridge, but instead retrieved from the container that the bridge received from the source. That way, both the source and the sink will have the same session key SK and the bridge will not have to decrypt and re-encrypt the content passing through it.

'Dumb' storage devices can be considered as bridges in which the content resides for a certain time before being passed to the sink. As such, the encrypted content received from the source will be stored as is inside the storage device along with the container that was received from the sink. To securely store this container, the storage device will encrypt it with its unique public key UPK. Upon retransmission of the content, the storage device will open the secure container by decrypting it with its unique secret key USK and retrieve the session key SK that was chosen by the source. It will then establish a session with the sink (after mutual authentication) and use the retrieved session key SK instead of choosing a random number.

Note that neither the bridging devices nor the storage devices have to be able to understand the format of the content to retrieve and interpret the associated digital rights. Note also that the maximum number of bridging or 'dumb' storage devices between source and sink is endless, provided the digital rights allow this kind of transmission.

Figure 8 schematically shows an embodiment of an arrangement in which a SCOP-enabled source device 810, such as a digital audio player, is wired to a SCOP-enabled sink 820, such as a digital receiver, and the content being securely transmitted is copy-never. Transmission from source to sink is allowed in this case, since the sink 820 has no recording capabilities.

Consider now that the consumer wants to eliminate all wires from his audio setup. He realizes this by buying two SCOP-enabled bridging devices 830, 831 that can convert from e.g. IEEE 1394 to Bluetooth and back. There will now be three links in his setup: source 810 to bridge 830, bridge 830 to bridge 831, and bridge 831 to sink 820.

Upon transmission of copy-never content the source 810 will not be able to make a correct decision regarding the transmission, as it will not be able to tell if the intended sink 820 is a recording device or a receiver. Therefore, it will leave that decision to the next mutually authenticated device in the chain and securely transmit the content in the manner described in the previous paragraph. The wired-to-wireless bridge 830 will however not be able to make a decision either and will again securely pass the content to the next mutually authenticated device (without having to decrypt and re-encrypt the content!).

The wireless-to-wired bridge 831 however, knows if it is connected to a recorder or a receiver and is able to retrieve a description of the digital rights associated with the content from the container and inspect them. If transmission is allowed it will pass the encrypted content to the sink 820, again without having to decrypt and re-encrypt the content.

Since the bridging devices 830, 831 do not have to know the format of the content to retrieve the associated digital rights or even process the content by decrypting and encrypting it, the added cost for protection will be minimal. To further extend this application a third SCOP-enabled wireless-to-wired bridge can be connected to another SCOP-enabled receiver located in another room. This third wireless-to-wired bridge will be mutually authenticated by the wired-to-wireless bridge and act just as the first one in the content protection scheme.

This way, the source 810 is wirelessly connected with one wired output, to multiple receivers with wired inputs without successive decryption/re-encryption for each SCOP link and without compromising the DRM-system. Fully transparent bridges could not have been used for this, since the source 810 would not know how to handle multiple sinks during mutual authentication, session establishment and encryption, since it only has one output. The SCOP-enabled wired-to-wireless bridge however will specifically be designed to handle multiple mutual authentication and session establishment without needing to decrypt/re-encrypt for each SCOP link.

### Digital Rights Management

The invention can be used in DRM-enabled devices such as a digital audio players and recorders. The devices then need to be aware of the digital rights the user has over the data they exchange. For example, if a digital audio player is connected to a digital audio receiver, the content will have to be securely transmitted over an SCOP link once. If the digital audio player is connected to a digital audio recorder or if the content already was played once, the content should not be transmitted over an SCOP link.

In an embodiment of the invention, two types of digital rights are distinguished: playing rights and recording rights. Of course other types of rights are also possible, and the invention is not restricted to the rights as defined in this embodiment.

### Playing rights

The user will have one of the following rights over the content he wishes to play:
- limited-time playing: the content may only be played for the first x number of seconds.
- limited-number playing: the content may only be played for a specified number of times on a specific player before becoming unplayable on that player.
- limited-period playing: the content may only be played for a certain period of time before it expires.
- unlimited playing: the content may be played completely for an unlimited number of times forever.
- no playing: the content may not be played (anymore).

Typically the digital playing right of a user will not remain the same but change from one type to another. For example, the user may receive a limited-time playing or no playing right for free and may wish to buy an unlimited playing or limited-number playing right. A limited-number playing right might also have evolved into a no playing right after the user played the content for the specified number of times. Digital playing rights could also be combined (limited-time playing with limited-period playing for example).

### Recording rights

The user will have one of the following rights over the content he wishes to record:
- limited-number recording: the content may only be recorded for the specified number of times before becoming unrecordable.
- unlimited recording: the content may be recorded for an unlimited number of times.
- no recording: the content may not be recorded (anymore).

Typically, if the digital recording rights allow it, the content will be recorded on a new medium along with the digital playing rights found on the original medium. It might however be useful to define a new digital recording right that allows the recording of content where the digital playing rights for the recorded medium are different from those of the original medium. For example, while a user might have a no playing right for some content, it might be useful to allow him to make copies of the content with a limited-time playing right for further distribution.

Thus, the user can have the following optional recording right:
- distribution recording: the content may be recorded an unlimited number of times but the digital playing rights will be specified by this recording right instead of being copied from the original medium

In the above, a distinction has been made between source and sink devices. Sinks can further be classified as recorders, receivers or bridges. Once two devices are mutually authenticated, the source will know what type of sink it is connected to. The following combinations are possible: source to recorder, source to receiver, and source to bridge.

### Source to recorder

During session establishment, the source will examine the digital recording rights the user has over the content that will be transmitted during that session. If normal recording is allowed, the source will transmit the digital playing rights of the user, along with the digital recording rights to the recorder by means of the doubly encrypted container as described in the section "Session Establishment". If normal recording is not allowed, but the user has a distribution recording right over the content, the source will instead transmit the distribution recording right along with the digital playing rights specified by this distribution recording right to the recorder.

The recorder (the sink) will double-check the digital recording rights of the user and come to the same conclusion as the source (recording allowed). Once the session is established, the content will securely be transmitted over the SCOP link and recording of the session will proceed. The received digital playing rights and the updated (by the sink) digital recording rights will be recorded on the new medium.

### Source to receiver

During session establishment, the source will examine the digital playing rights the user has over the content that will be transmitted during that session. If playing is allowed, the source will transmit the digital playing rights of the user, with a no recording digital right by means of the doubly encrypted container. The receiver will double-check the digital playing rights of the user and come to the same conclusion (playing allowed). Once the session is established, the source will update the digital playing rights the user has over the content. After this is done, the content will be securely transmitted over the SCOP link and playing of the session by the receiver will proceed.

### Source to bridge

Since the source will not be able to identify the type of sink that is connected to the bridge, it will establish a session with the authenticated bridge and securely transmit the digital playing rights along with the digital recording rights a user has over the content by means of the doubly encrypted container. The bridge is able to identify the type of sink it is connected to, so it is able to manage the digital rights by applying (as source) the method described in "Source to recorder" if the sink is a recorder, "Source to receiver" if the sink is a receiver or "Source to bridge" if the sink is yet another bridge.

### Key Revocation

Revocation is only recommended for compromised devices that use strong protection during authentication. In that case, the authorized entity will generate a revocation certificate containing the public key UPK of the revoked device and sign it with the private key of the Certification Authority. This revocation certificate will then be distributed to devices in the field through newly released media (CDs, DVDs, and so on), through communication channels (Internet, broadcast networks, and so on), or through the interconnection of the devices themselves.

When a device receives such a revocation certificate, it will verify it using the public key of the Certification Authority CAPK and securely store it. During mutual authentication, the device will check that the public key it received from the other device was not revoked by inspecting the stored revocation certificates. Note that the term 'device' is used in a broad sense. For example, a content distribution service on the internet could also be revoked, thereby preventing malicious users to set up an illegal content distribution service on the internet by using a set of compromised keys for authentication and encryption.

Another example is the revocation of a compromised software player on a PC that acts as a sink, thereby rendering the further distribution of this compromised player through the Internet useless. Furthermore, revocation of groups of devices will also be supported by generating and distributing, in the same way as described above, group revocation certificates that contain the group ID of a set of compromised devices; thereby revoking all those devices using one revocation certificate.

Weakly protected devices should not support revocation, as the revocation certificate would have to be signed using the shared private key, which is only protected from malicious users by the way it is hidden in the devices. Should that key be known, malicious users might produce fake revocation certificates for weakly protected devices and spread them in a virus-like manner across all the devices in the field, thereby rendering a substantial number of perfectly legal devices inoperable. The original hassle of having a compromised weak protection scheme that allows some users to make illegal copies, will then evolve in a much worse problem of having honest users' devices contaminated by the fake revocation certificates and returning their inoperable devices to the manufacturer.

## Claims

1. A first device (110) arranged for exchanging data with a second device (130) comprising
- receiving means (113) for receiving from the second device (130) a certificate for a public key (UPK) for the second device (130), and
- authenticating means (114) for authenticating the second device (130) as a strongly protected device upon a successful verification of the received certificate with a public key of a Certifying Authority (CAPK), if the public key of the Certifying Authority is available, and authenticating the second device (130) as a weakly protected device upon a successful verification of the received certificate with the locally available public key (SPK).

2. The first device (110) of claim 1, further comprising transmitting means (112) for transmitting to the second device (130) a certificate for a public key (UPK) for the first device (110), the certificate either being signed by a Certifying Authority or being signed by a locally available secret key (SSK).

3. The first device (110) of claim 2, whereby the certificate is signed by the Certifying Authority if the second device (130) has been authenticated as a strongly protected device, and the certificate is signed by the locally available secret key (SSK) if the second device (130) has been authenticated as a weakly protected device.

4. The first device (110) of claim 1, the authenticating means (114) being arranged for preventing exchanging data with the second device (130) if the second device (130) has been authenticated as a weakly protected device and the first device (110) is a strongly protected device.

5. The first device (110) of claim 1, further comprising a weak encryption key generator (113) arranged for computing a first hash of a concatenation of the session key and the locally available secret key (SSK), and using the first hash as an encryption key for encrypting data to be exchanged with the second device (130).

6. The first device (110) of claim 5, whereby the weak encryption key generator (116) is further arranged for subsequently computing a second hash of a concatenation of the first hash and the locally available secret key, and using the second hash in the place of the first hash.

7. The first device (110) of claim 1, further comprising session establishing means (115) for building a container comprising a session key and Digital Rights Management data, signing the container with a secret key (USK) corresponding to the public key (UPK) for the first device (110), encrypting the signed container with the public key (UPK) for the second device (130) and transmitting the signed and encrypted container to the second device (130).

8. The first device (110) of claim 1, further comprising session establishing means (115) for receiving from the second device (130) a signed and encrypted container, decrypting the container with a secret key (USK) corresponding to the public key (UPK) for the first device (110), verifying the signature with the public key (UPK) for the second device (130), and obtaining a session key and Digital Rights Management data from the container.

9. A method of authenticating a remote device (120), comprising
• receiving (250, 310) from the remote device (120) a certificate comprising a public key (UPK) for the remote device (120),
• authenticating (290) the remote device (120) as a strongly protected device upon a successful verification (270, 330) of the received certificate with a public key (CAPK) of a Certifying Authority, if the public key of the Certifying Authority is available, and authenticating (292) the remote device (120) as a weakly protected device upon a successful verification (275, 350) of the received certificate with a locally available public key (SPK).

10. A computer program product arranged for causing a processor to execute the method of claim 9.
